# EUROPEAN PATENT SPECIFICATION

(11) **EP 4 211 527 B1**
(45) Date of publication and mention of the grant of the patent: **12.03.2025**
(21) Application number: 21762153.1
(22) Date of filing: 11.08.2021
(51) Int. Cl.: G05D 1/225, G05D 1/617, E02F 9/20, G05B 19/042, G05D 107/70, G05D 109/10

(54) **METHOD AND SYSTEM FOR RESTRICTING OPERATION OF AT LEAST ONE AUTOMATED MINING VEHICLE**
VERFAHREN UND SYSTEM ZUR EINSCHRÄNKUNG DES BETRIEBS VON MINDESTENS EINEM AUTOMATISIERTEN BERGBAUFAHRZEUG
PROCÉDÉ ET SYSTÈME DESTINÉS À INTERDIRE LE FONCTIONNEMENT D'AU MOINS UN VÉHICULE AUTOMATISÉ D'EXPLOITATION MINIÈRE

(30) Priority: 10.09.2020 SE 2030284
(43) Date of publication of application: 19.07.2023
(73) Proprietor: Epiroc Rock Drills Aktiebolag, 701 91 Örebro (SE)
(72) Inventor: HENDEBERG, Richard, 716 92 Fjugesta (SE); ÖKVIST, Andreas, 711 91 Lindesberg (SE)
(74) Representative: Epiroc Rock Drills AB
(86) International application number: PCT/SE2021/050785
(87) International publication number: WO 2022/055404

(56) References cited:
- CA-A1- 2 777 897
- CA-A1- 2 949 360

## Description

### Field of the invention

The present invention relates to mining, and, more specifically, to a method and system for restricting operation of at least one automated mining vehicle. The invention also relates to a computer program implementing the method according to the invention.

### Background of the invention

With regard to mining and tunnelling there is a constant ongoing process of improving e.g. efficiency, productivity and safety. Examples of changes/improvements that are carried out to an increasing extent is the automation of vehicles (machines).

It is, for example, often desirable that at least part of the machines that are used in mining/tunnelling can be driven in a fully autonomous mode, i.e. without an operator being required to influence the steering. There may also be machines that are remotely controlled by an operator being located at a distance from the machine being remote controlled.

It is in general the case that mining environments are dark and inaccessible, and it may be therefore difficult to detect whether personnel on foot and/or manually operated vehicles are present among the unmanned vehicles. Such presence impose safety risks, in particular accidents may occur.

In order to increase safety in mining, therefore, machines that are remotely operated or operated in an autonomous mode are, in general, restricted to be used within certain safety zones forming part of the general mining work area. In this way the autonomous machines may be confined to dedicated parts of a work area that are free from other vehicles and personnel, to thereby avoid exposing operators to possibly hazardous environments mixing unmanned vehicles with simultaneous presence of operators.

It is therefore also important that such areas (safety zones) in which vehicles are operated by remote control or autonomously, are separated and secured from areas where manual activities are in progress.

Entrance and exit to/from a safety zone are monitored by barrier sensors forming part of barriers that are used at the entrances and exits of the safety zones. The safety system may be configured such that each safety zone is associated with barriers (and associated barrier sensors) arranged at all entrances to the respective safety zone.

CA 2 777 897 A1 discloses an apparatus that can be used for passage control of mining vehicles. The apparatus consists of control means and a set of movable passage control units. After installation and activation of the apparatus, a user may freely choose through an interface which specific passage control units are to be used for passage control.

CA 2 949 360 A1 discloses a safety system for automated operation of mining vehicles. Barrier control units define entry points to safety zones wherein automated operation is allowed. Mining vehicles may be checked-in/checked-out of the safety zones by means of identification keys.

### Summary of the invention

It is an object of the invention to provide a method and system that may increase safety in a mine where unmanned vehicles are operating. In particular, it is an object of the invention to provide a safety system that may be adapted to changing needs with regard to safety zones for unmanned operation, while still preserving safety when a change is performed and following the change.

The invention is defined by the independent claims. Furthermore, the embodiments of the invention are those defined by the claims. Moreover, examples and embodiments, which are not covered by the claims, are presented not as embodiments of the invention, but as background art or examples useful for understanding the invention.

According to the invention, it is provided a safety system for restricting operation of at least one automated mining vehicle to a safety zone forming part of a work area, where the work area comprises one or more safety zones defined by barrier sensors at respective entrances and/or exits of the one or more safety zones. Sensor signals of a barrier sensor are communicated by sensor communication circuitry, and the safety system comprising a main control unit controlling operation of the one or more safety zones, based on barrier sensor signals received from the sensor communication circuitry.

The main control unit is configured to store a plurality of safety zone configurations, and the main control unit comprises an interface configured to enable a switch from one safety zone configuration to another, such that a safety zone configuration to be used for automated operation of mining vehicles within the work area is selectable via the interface, and wherein a plurality of different safety zone configurations are selectable through the interface.

Only a predetermined plurality of predefined settings are selectable through the interface when switching from a first safety zone configuration to a second safety zone configuration, and a switch from a first safety zone configuration to a second, safety zone configuration causes the main control unit of the safety system to control operation of the one or more safety zones according to the selected safety zone setting.

The work area may form part of an underground mine, and the automated mining vehicle may be an automated underground mining vehicle. The automated mining vehicle may further be automated e.g. by remote control or configured for autonomous operation.

As was mentioned above, mining environments may be dark and inaccessible. In addition, mining machines are oftentimes large, and available room for manoeuvrability in relation to e.g. rock walls may be limited. It is therefore undesirable to have unmanned vehicles and manually operated vehicles, and/or persons on foot, being simultaneously present at a same location since undesired accidents may then occur.

Situations of this kind may be avoided through the use of safety systems where use of unmanned vehicles is confined to one or more closed-off areas to thereby prevent or at least reduce the occurrence of possibly dangerous situations.

The safety system may be configured such that the one or more closed-off areas may comprise different portions of the work area, where the safety system control entrance to and/or exit from the one or more safety zones to ensure that only unmanned vehicles are present in the safety zones when the unmanned vehicles are in operation. As mining progress, however, there may arise needs for different safety zone configurations, i.e. a change in the number of safety zones, and/or a change of the geographical extension of one or more safety zones. Such alterations, however, may unintentionally impose safety issues, in particular vulnerabilities that may expose mining personnel to risk.

According to the invention, it is provided a safety system and method that may reduce the risk of unintentionally subjecting mining personnel to risk.

This is accomplished by the main control unit being configured to store a plurality of safety zone configurations, and the main control unit comprises an interface configured to enable a switch from one safety zone configuration to another, such that the safety zone configuration to be used for automated operation of mining vehicles within the work area is selectable via the interface, and wherein a plurality of different safety zone configurations are selectable through the interface.

Hence only the predetermined plurality of predefined settings, such as selections of predetermined safety zone configurations, are selectable through the interface when switching from a first safety zone configuration to a second safety zone configuration, and a switch from a first safety zone configuration to a second safety zone configuration causes the main control unit of the safety system to control operation of the one or more safety zones according to the selected setting.

Furthermore, since only a predetermined set of safety zone configurations are selectable this simultaneously means that any other non-predetermined safety zone configurations are prohibited. The selectable predetermined set of safety zone configurations is determined before the safety system is taken into operation, where the determination of allowable configurations may be performed by safety system experts or other persons that are capable of accurately determining the safety zones configurations that may be utilised in the work area while still maintaining safety.

In principle, the configuration of the safety system can be seen as being regulated by a pre-defined "rule book", constituting a database of valid configurations, where there may be a number of different predefined safety zone configurations.

The rules, i.e. valid configurations, may then be based on operational risk assessment as the automated work area is first setup, where various alternatives may be thoroughly evaluated before being added as a selectable configuration.

During the risk assessment, a plurality of barrier sensor positions of the work area may be established, where the barrier sensor positions define possible entry/exit positions of safety zones. The safety system configurations are then confined to use of these barrier sensor positions.

A plurality of safety zone configurations are determined during the risk assessment, where hence entrances and/or exits of safety zones of the safety zone configurations utilise said established plurality of barrier sensor positions, and the plurality of safety zone configurations that will be possible to use in the safety system are selected based on a risk assessment. The safety system is then controlled such that, in operation, only the predetermined plurality of different safety zone configurations that have been approved during risk assessment are selectable.

Furthermore, according to embodiments of the invention, not all predetermined safety system configurations may be available for selection for a particular currently set/active safety zone configuration. That is, a particular safety zone configuration may be available for selection only when switching from a particular currently set/active safety zone configuration.

This hence prevents an operator from creating safety zones that, because of e.g. inexperience, may give rise to an increased risk. Also, it may be prevented that safety zones are configured in a manner where e.g. the main control unit is not set to control the safety zones based on signals from barrier sensors that in reality are needed in the control to provide the desired safety. The safety system will hence not accept any other configurations than the configurations that are predefined and prestored.

This also allows that when switching from one safety zone configuration to another, only safety zones, and possible other areas of the work zone, that are actually affected by the switch need to be involved by the switch. In case there are non-affected safety zones, i.e. safety zones that will remain the same in the new configuration, operation may be arranged to continue in such safety zones while the switch is ongoing. In current safety systems, machines have to be stopped and all zones be disarmed whenever a new configuration is to be made, possibly giving rise to hazardous situations as described above.

The invention hence allows for a more dynamic safety system allowing a switch of configurations without unnecessarily stopping machines and disarming zones, while still maintain safety.

According to embodiments of the invention, different safety zone configurations utilise at least partly different sets of a predefined plurality of barrier sensors of the work area as entrances and/or exits of the one or more safety zones. There may hence be a predefined plurality of barrier sensors provided in the work area, where only the provided set of barrier sensors may be utilised for the different safety zone configurations. Thereby there may be barrier sensors arranged in the mine, which may or may not be used in a particular safety zone configuration. Still only the predetermined plurality may be utilised in the safety zone configurations, i.e. no additions of barrier sensors may be performed since such sensors would not form part of the predefined safety zone configurations.

According to embodiments of the invention, the predefined plurality of safety zone configurations may utilise all, or a selection of, the predefined set of barrier sensors, located at defined locations of the work area, each safety zone configuration utilising barrier sensors of the predefined set of barrier sensors in a manner such that the safety zone configurations represent a different number of, and/or different geographical extension of, safety zones.

According to embodiments of the invention, the influence of a particular barrier sensor of the work area, when the main control unit control operation of the safety zones, will depend on whether or not the particular barrier sensor is located at a position used as an entrance and/or exit of a safety zone according to the selected safety zone configuration. A particular barrier sensor may hence have an impact only if it is utilised by the selected safety zone configuration, where sensor signals of the particular barrier sensor may be disregarded by the main control unit in case the barrier sensor does not form part of the current safety zone configuration.

According to embodiments of the invention, the signals representing a state of a barrier sensor indicate whether or not a presence is detected by the barrier sensor, i.e. whether or not the barrier sensors detect presence of an object such as a vehicle at a particular barrier sensor.

According to embodiments of the invention, the barrier sensors are configured to detect of presence of an object such as a vehicle by a light and/or other beam being obstructed. That is when the barrier sensor detects an obstruction of a light (or other) beam, signals indicating presence of an object may be transmitted to the main control unit. Instead or in addition to a light (or other) beam being monitored, e.g. a cable connection may be monitored and signals indicating presence may be transmitted when the connection is disconnected. Any other type of electrical circuit may also be monitored, where e.g. signals representing presence may be transmitted when the electrical circuit is broken. The barrier sensor signals may also represent e.g. a gate being opened. Any other suitable means for detecting presence using barrier sensors may also be utilised.

According to embodiments of the invention, the safety system, upon receiving a request for a switch of safety zone configuration through the interface, is configured to prompt actions to be taken and acknowledged by an operator in order to ensure proper detection of objects at the barrier sensors of a safety zone, so that compliance with the selected configuration is obtained. For example, when switching from a first safety zone configuration to a second safety zone configuration, there will be a change in the barrier sensors being utilised in the current safety zone configuration in relation to the selected safety zone configuration.

This, in turn, means that there may be barriers that need to be armed when a new safety zone is added or the geographical extent of a safety zone in use is changed. A barrier may be armed e.g. by taking an action such as suitable manoeuvring of buttons or breakers or the like at the location of a barrier, and possibly also taking actions e.g. with regard to setting physical barriers in position. The arming of a barrier may also include ensuring that there is no presence of manually operated vehicles, or other personnel in the safety zone being taken into use. Similarly, there may be barriers that needs to be disarmed by taking similar (albeit opposite) actions.

The safety system may prompt the actions that need to be taken in order to take the new safety zone configuration into use, and the operator requesting the switch may need to acknowledge each action that is to be taken to ensure conformity with the stored safety system configuration being taken into use.

According to embodiments of the invention a vehicle, when being taken into, or out from, use in a particular safety zone, is checked-in to, or checked-out from, the safety system such that the main control unit is aware of the current presence of vehicles in the safety zones, to thereby be able to correctly stop the particular one or more vehicles being present in a safety zone in case of a detected unauthorised presence.

The safety system may be configured to, when checking-in or checking out a vehicle, comprise signal receiving means for receiving an identity of the vehicle, e.g. through RFID or other wireless communication. This allows facilitated, and e.g. automatic check-in and check-out of vehicles. Signals being received by the receiving means may e.g. be communicated by barrier sensor circuitry or other suitable means to the main control unit.

Each entrance and/or exit, i.e. barrier, may be provided with at least a first and a second barrier sensor for detecting presence of an object, the first and second barrier sensors being located at a distance from each other, so as to, by successively detecting an object by one of the first and second barrier sensors followed by detecting an object by the other of the first and the second barrier sensors, determine a direction of motion of the object.

In this way, a vehicle may be automatically checked-in to, or checked-out from, a safety zone by detection of an identity of the machine, and by successive detection of presence by one of the at least a first and a second barrier sensor followed by detection of presence by the other of the at least a first and a second barrier sensor.

According to embodiments of the invention, the system is configured to, when unauthorised presence of an object at an entrance and/or exit of a safety zone is detected by a barrier sensor delivering signals indicating that an entry/exit of a safety zone is crossed, transmit a stop command to vehicles being present in the safety zone, so as to stop operation of vehicles being present in the safety zone to thereby reduce the risk for dangerous situations occurring. All vehicles associated with that area are stopped for safety reasons. Still, only vehicles of a safety zone being affected by the unauthorised presence needs to be stopped. Vehicle in other safety zones may continue operation unaffected.

The vehicles may be stopped by a vehicle module being fitted in the vehicle, where the vehicle module stop operation of the vehicle upon request from the main control unit. The vehicle module may be retrofitted and e.g. be arranged to stop fuel supply and/or apply brakes to stop the vehicle. Since the vehicle module may be retrofitted, this may be attached to any vehicle that is to be set up for unmanned operation. Hence the vehicle itself need not be specially designed for the safety system.

A barrier sensor may be shared by two safety zones, thereby being used as entry/exit between the two safety zones. In case such a sensor detects unauthorised presence, vehicles of both affected safety zones may be stopped.

It will be appreciated that the embodiments described in relation to the system aspect of the present invention are all applicable also for the method aspect of the present invention. That is, the method may be configured to perform the method as defined in any of the above described embodiments. Further, the method may be a computer implemented method.

The method may further comprise, prior to the main control unit activating and controlling operation of the one or more safety zones according to the selected safety zone configuration, determine whether the signals representing the states of the barrier sensors indicate that the barrier sensors as set according to the selected safety zone configuration and activating operation of the one or more safety zones according to the selected safety zone configuration only when the indicated states of the barrier sensors comply with the selected safety zone configuration.

Further characteristics of the present invention and advantages thereof are indicated in the detailed description of exemplary embodiments set out below and the attached drawings.

### Brief description of the drawings

Fig. 1 schematically illustrates a work area comprising a safety system according to embodiments of the invention,
Fig. 2 schematically illustrates a first exemplary safety zone configuration of the work are in fig. 1;
Fig. 3 schematically illustrates an exemplary method according to embodiments of the invention;
Fig. 4 schematically illustrates a second exemplary safety zone configuration of the work area of fig. 1;
Fig. 5 schematically illustrates a further exemplary safety zone configuration of the work area of fig. 1;

### Detailed description of exemplary embodiments

Embodiments of the present invention will be exemplified in the following in view of a particular example of a safety system layout for a particular exemplary work area. The example is completely exemplary and non-limiting.

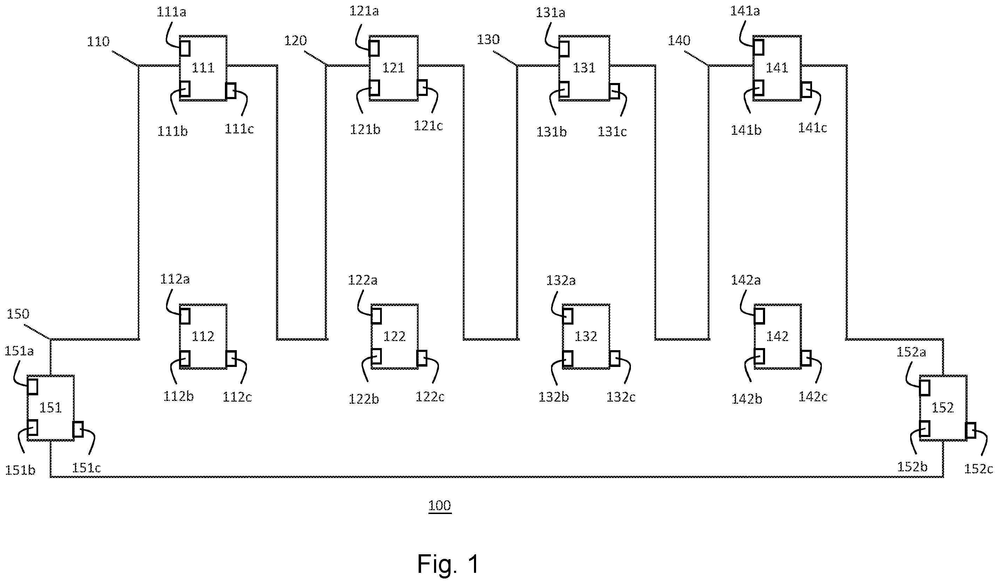

Fig. 1 schematically shows a work area 100 forming part of an exemplary underground mine utilising a safety system according to embodiments of the invention. The work area 100 comprises various drifts, or tunnels, 110, 120, 130, 140, 150, in which mining is carried out, and in which different kinds of mining vehicles may be operating. These mining vehicles may, for example, include drill rigs, LHD (load-haul-dump) machines, and/or various other kinds of vehicles. The vehicles may be manually operated or automated by remote control or autonomous operation.

As was mentioned above, the safety system is used to control operation of, in particular, unmanned vehicles such as autonomous vehicles. This is accomplished by the use of safety zones, so that a vehicle, while in unmanned operation, can be confined to a particular safety zone where other vehicles such as operator driven vehicles and/ operators or other personnel being present on foot are not present. The safety zones may hence be used to avoid unintentional simultaneous presence of unmanned vehicles and operator driven vehicles or personnel on foot at a particular location at the same point in time.

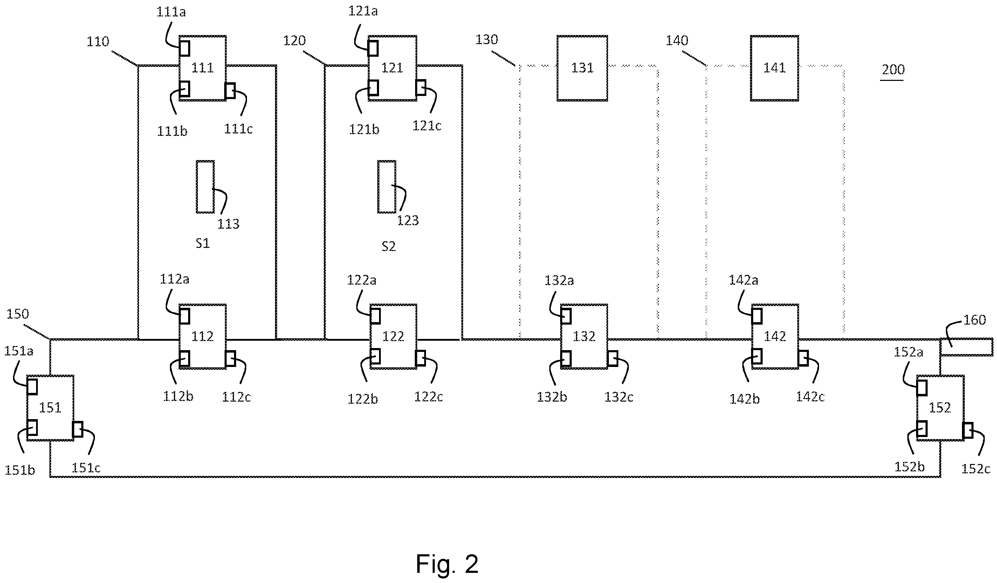

According to the example of fig. 1, the safety system comprises a plurality of barriers 111, 112, 121, 122, 131, 132, 141, 142, 151, 152 through the use of which the work area 100 of fig. 1 may be divided into various different safety zone configurations as will be discussed in the following. It is to be understood that the boxes that represent barriers in the drawings are drawn for illustration purposes only. In reality the barriers does not permanently block the middle of a tunnel as it appears in the figures. Instead, barrier sensors (discussed further below) may be arranged along the rock walls so as to allow free passage through the barrier in case the barrier currently does not form part of an active safety zone configuration. The barriers may be of various different designs, and may also comprise physical obstructions such as bars that may automatically and/or manually be put in place when a barrier is armed for active use in a safety zone configuration. As was mentioned above, the invention provides for a switch between safety zone configurations while maintaining safety by only allowing switch between predetermined, and thereby thoroughly evaluated from a safety point of view, configurations. The various safety zone configurations may use different sets of the barriers of the work area. There may hence be a predefined plurality of barrier sensors provided in the work area, where only the provided set of barrier sensors may be utilised for the different safety zone configurations. As will be shown e.g. with reference to fig. 2, there may be barrier sensors arranged in the mine, which may not be used in a particular safety zone configuration. Still only the predetermined plurality may be utilised for any of the safety zone configurations, i.e. no additions of barrier sensors may be performed since such sensors would not form part of the predefined safety zone configurations. The predefined plurality of safety zone configurations may hence utilise all, or only a selection of, the predefined set of barrier sensors.

Fig. 2 illustrates a first example of a safety zone configuration 200, where the safety system is currently configured such that a first safety zone S1 and a second safety zone S2 has been defined in the work area of Fig. 2, where safety zone S1 forms part of tunnel 110, and where safety zone S2 forms part of tunnel 120. It is to be understood that the tunnels 110, 120, as well as the tunnels 130, 140, 150 extend beyond the barriers shown in the figure. In general, according to embodiments of the invention, n safety zones S1-Sn may be defined within the work area 100, e.g. in dependence of the size and/or layout of the work area, where n is an arbitrary number. This, however, as has been explained above, and which will be further explained below, is also subject to the restrictions that is set up for the work area in regard of allowed safety zone configurations. Fig. 2 hence represents one example of a possible safety zone configuration, or layout, of the work area 100, and according to which safety zone configuration the safety system is presently set to control operation in the mine.

Furthermore, according to the example of fig. 2, vehicles 113, 123 are illustrated as being present in the work area. In particular according to the enclosed example, an autonomously operating underground mining vehicle 113 is illustrated as being in operation in tunnel/drift 110, and a further autonomously operating underground mining vehicle 123 is illustrated as being in operation in tunnel/drift 120.

As discussed, the safety zones are defined by one or more barriers, forming entrances and/or exits to/from the area that is set to form a particular safety zone, such as safety zones S1, S2. The safety system monitors passage through the barriers, and take appropriate action in case of detected presence of an object. Each safety zone may be associated with only one, or two or more barriers. The safety zones S1, S2 in fig. 2 are each being associated with two barriers, 111-112 and 121-122, respectively. The barriers 111-112, 121-122 may comprise physical features that allow easy identification, and location of, the barriers 111-112, 121-122 in the work area, e.g. by mining personnel. The barriers are, however, represented by barrier sensors in terms of functionality. According to the present example, each barrier comprises at least two barrier sensors, forming outer barrier portion and inner barrier portion sensors, located at a distance from each other, 111a, 111b; 112a, 112b; 121a, 121b, and 122a, 122b, respectively, which are used to actually detect presence of an object at the barriers 111-112, 121-122. The barriers may have a physical extension in length being such that a mining vehicle may fit between the outer and inner barrier sensors of a barrier.

The safety system further comprises barrier sensor circuitry 111c, 112c, 121c, 122c (the barrier control units are also illustrated for the barrier sensors in the figure that are not used in the particular safety zone configuration of fig. 2), according to the present example in the form of barrier control units, that communicates sensor signals of the barrier sensors to a main control unit 160 which may be located at any suitable location, and preferably outside any area that is, or that is contemplated for forming part of a safety zone. The main control unit 160 may be located in the vicinity of the part or parts of the work area contemplated for unmanned operation to facilitate communication between the main control unit 160 and the various barrier sensors. The main control unit 160 controls operation of the safety system, and hence in particular operation of the active safety zones based on the sensor signals. The safety system further comprises an interface such as a display and/or other input/output means, that allow communication with the main control unit, and which may be arranged e.g. in a joint cabinet with the main control unit. The interface may also be accessible from a control centre for control of unmanned vehicle operation or similar, e.g., at a location of the main control unit or remote from the main control unit. The main control unit may also be located in such a control centre.

The barrier control units 111c, 112c, 121c, 122c may be suitably arranged in control cabinets comprising suitable manual manoeuvring devices or knobs for manual activation and deactivation of the inner and outer barrier portions, and hence the operation of the barrier sensors. According to embodiments of the invention, the barrier sensors are activated and deactivated remotely, e.g. by the main control unit 160.

The barrier control units may communicate with the main control unit 160 through suitable wired or wireless communication means. There may be a plurality of barrier sensors for each inner and outer barrier portion, and a particular barrier sensor circuitry may be designed to control the one or more barrier sensors of an inner or outer barrier portion only, or e.g. all barrier sensors of a barrier as in the illustrated example. The above applies similarly to the various illustrated barrier sensors and barrier sensor circuitry of the other barriers that are illustrated in fig. 2.

Each barrier sensor is hence arranged in connection with/and or constitutes and control an outer barrier portion or an inner barrier portion. The inner portion of the barrier may be the end facing inwards towards a safety zone, where, similarly, the outer portion of the barrier may be the end facing away from the safety zone. It is to be understood that in dependence of the configuration of safety zones in a work area, a change of the safety zone configuration may have the result that the inwards facing barrier portion may instead become an outwards facing barrier portion, and vice versa. Two safety zones may also share a barrier, so that an inwards facing barrier portion of one of the safety zones is the outwards facing barrier portion of the other safety zone, and vice versa. Furthermore, the outer barrier portion and the inner barrier portion may suitably consist of light gates, where presence is detected when one or more light beams being monitored by a barrier sensor are obstructed.

The barrier sensors hence detect presence of an object such as a vehicle at a particular barrier, where the signals that the barrier sensor delivers indicate whether or not a presence is detected by the barrier sensor. According to the present example, the barrier signals also indicate whether there is a presence at an inner or outer barrier portion, and in addition, or as an alternative, to a presence of an object such as a vehicle or person being detected by a light being obstructed, the barrier sensor may e.g. be designed to detect any other visible or non-visible beam of a suitable kind.

The barrier sensors may also be designed to detect e.g. whether a cable connection is disconnected e.g. by a gate being opened, and/or any other suitable means for detecting presence, such as an electrical circuit being broken. Although the barriers may comprise physical obstacles, such as gates, there are still sensors that detect if the barriers are breached by such physical obstacles being opened or run down by a vehicle. Either or both of the inner and outer barrier portion may comprise such physical obstacles and corresponding sensors. The main control unit 160 may also determine whether a detected presence is detected by an inner or an outer portion barrier sensor. When the inner barrier portion and the outer barrier portion are arranged such that a mining vehicle can fit between them, this allows, for example, determination of whether a vehicle has completely passed one of the inner and outer barriers portions, before the vehicle passes the other of the inner and outer barriers portions, so that a direction of motion of a vehicle (in terms of entering or leaving a safety zone) can be determined, and whether a vehicle actually enters or leaves a safety zone.

The safety zones S1 and S2 may each have a primary entrance, where check in and check out of a mining vehicle to the respective safety zone S1, S2 may be restricted to the primary entrance. According to embodiments of the invention, a safety zone may have two or more entrances/exits where check in of a vehicle may be allowed from each of the entrances/exits, or, alternatively, check in of a vehicle may only be allowed from a primary entrance/exit where other entrances/exits may e.g. be used by personnel only. For example, with regard to fig. 1 the barriers 112, 122, 132, 142 may be used as primary entrances/exits, whereas the barriers 111, 121, 131,141 may be used as secondary entrances/exits, e.g. only allowing entrance/exits by persons, or emergency exit.

The barrier control units may be arranged outside the outer barrier controlled by the barrier control unit, respectively, so as to, for example, allow activation of the safety zone from outside the safety zone. In case there are secondary entrances/exits the barrier control units may be arranged on the inside of the barrier in case the particular safety zone will only be used in a way where the secondary entrance/exit is armed from the inside followed by an operator passing through the safety zone in order to activate the primary barrier from outside the safety zone.

A safety zone S1, S2 is activated when all inner barriers portions and outer barrier portions are activated and all entrances/exits to the one or more safety zones are secured e.g. in case physical means are used to block the barrier. With regard to the example of fig. 2 this means that barriers 111, 112, 121, 122 would be armed in order to allow operation according to the illustrated safety zone configuration where safety zones S1 and S2 are utilized.

According to embodiments of the invention, the barriers may be armed from a distance, e.g. through the interface that is used for communication with the main control unit 160.

When the safety system is armed, i.e. the main control unit 160 is actively monitoring the safety zones S1, S2, in particular the signals delivered by the barrier sensors 111a, 111b, 112a, 112b, 121a, 121b, 122a, 122b.

If an object, such as a person or a vehicle crosses an inner or outer barrier portion in one of the safety zones S1, S2, one or more of the barrier sensors 111a, 111b, 112a, 112b, 121a, 121b, 122a, 122b will detect this presence and communicate the detected presence to the main control unit 160, through the barrier control units 111c, 112c, 121c, 122c, where, as mentioned, a single barrier control unit may be responsible for all sensors of a barrier, which is the case in the present example, or where e.g. separate barrier control units may be utilised for the inner and outer barrier portions.

The main control unit 160, upon reception of the signals indicating the detected presence, will deactivate operation in the safety zone for which presence is detected.

This may be carried out by the main control unit 160 being arranged to immediately affect the operation of all the mining vehicles that currently are present in the safety zone for which presence is detected. In case the presence is detected for a barrier that separates two safety areas, the main control unit may be arranged to immediately affect the operation of all the mining vehicles being present in any of the two safety areas. According to the example of fig. 2, in case presence is detected by barrier 111 or 112, the mining vehicle 113 in the safety zone S1 to be deactivated is preferably set in a safe state, which for example may mean that the mining vehicle 113 is stopped or turned off. The main control unit 160 may communicate with vehicle control units of the one or more mining vehicles that are checked-in in the current safety zone S1, S2, where the vehicle control units may execute the stopping of the vehicle. The vehicle control unit may form part of the safety system and be retrofitted to the vehicles that are to operate unmanned in safety zones, and execute stopping of the vehicle on request.

According to embodiments of the invention, a vehicle, when being taken into or out from use in a safety zone such as safety zone S1, S2, is checked-in to or checked-out from the safety zone such that the main control unit 160 is aware of the current presence of vehicles in the safety zones, to thereby be able to correctly stop the particular one or more vehicles being present in a safety zone in case of a detected unauthorised presence.

The barriers may comprise means for manual checking-in and checking out of vehicles, e.g. through a suitable interface, where e.g. a vehicle identity may be manually entered, or determined from RFID or other wireless communication, where the vehicle identity may be an identity of the vehicle module. RFID or other wireless communication may also allow automatic check-in and check-out of vehicles, where signals being received at a barrier may be communicated by barrier sensor circuitry or other suitable means to the main control unit. In combination with sensor signals from the inner and outer barrier portion sensors a direction of motion of the vehicle can be determined, so that a vehicle is accurately checked-in or checked-out to/from a safety zone.

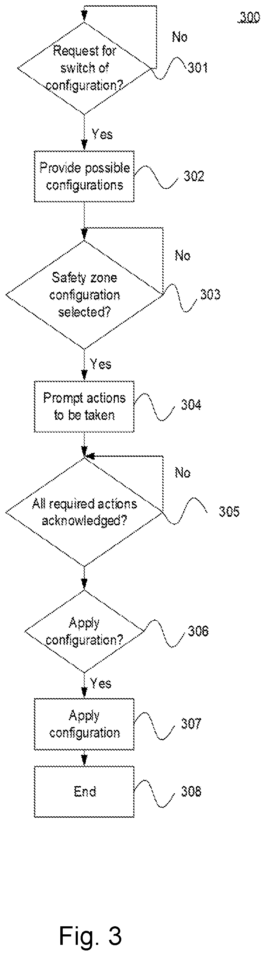

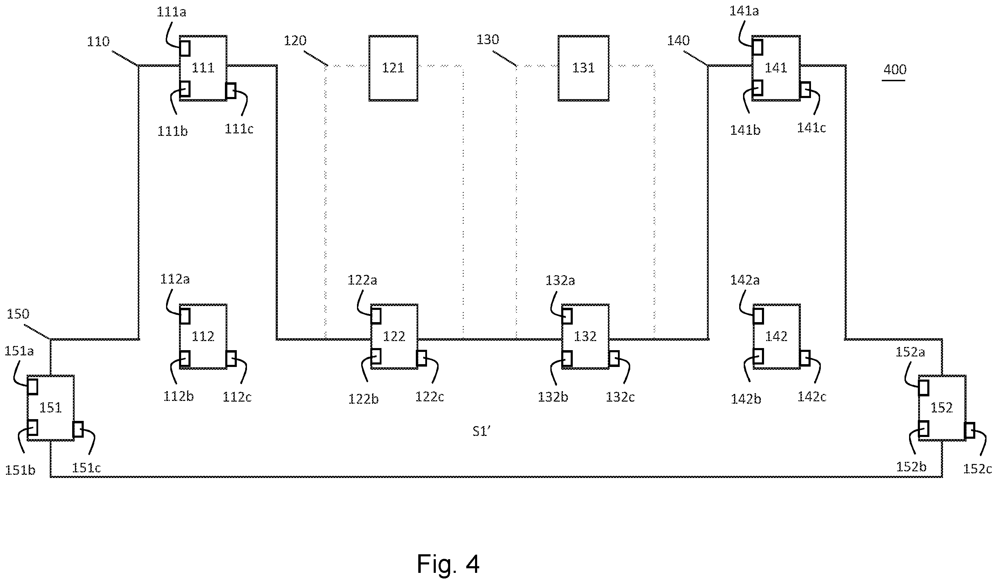

As discussed, the invention increases safety by only allowing use of predetermined safety zone configurations, and fig. 3 schematically illustrates a method for switching from a first predetermined safety system configuration to a second predetermined safety system configuration. In particular, a switch is performed from the safety system configuration of fig. 2 to the safety system configuration of fig. 4. In step 301 it is determined whether there is a request for changed settings of the safety system. According to the invention, the mine operator assigned with the task to switch safety system configuration accesses the safety system through the interface in order to communicate with the main control unit 160. The interface of the main control unit 160 may as discussed be accessible from a remote location, e.g. through a computer or directly from where the main control unit 160 is located. When there is a request for a changed setting of the safety zone configuration, indicated by suitable input from the operator, valid alternatives, e.g. in terms of valid safety zone configurations, may be provided and displayed by the safety system, step 302. As was discussed above, according to the invention only predetermined safety system configurations, and hence settings, are possible to select, and it is not possible to redesign a safety zone configuration since this might subject the safety system to unintentional risk.

The interface, such as a display, provides means for selecting desired settings for the safety system, where the set safety zone configuration of fig. 2 is to be switched to instead be set to the safety zone configuration of fig. 4. That is, the safety system configuration is to be switched from the situation in fig. 2 where tunnels 110, 120 each form separate safety zones S1, S2 to a configuration where tunnel 120 no longer form part of a safety zone, and where, instead, tunnels 140 and 150, together with tunnel 110 instead form a new single safety zone S1'.

According to the present example, this is an allowed switch. According to embodiments of the invention, although there may be a plurality of different predetermined safety system configurations that per se are available for use, there may be further restrictions that also delimit the possible alternatives for a switch from a particular safety system configuration. That is, not all predetermined safety system configurations may be available for selection for a particular currently set/active safety zone configuration. Hence the safety zone configuration of fig. 4 may not be selectable from all safety zone configurations.

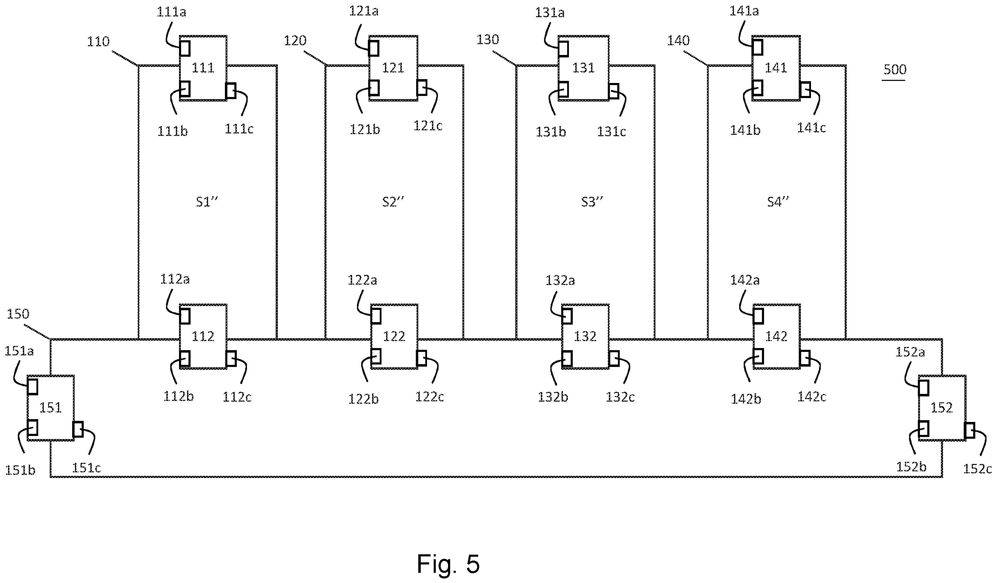

According to the present example, however, there may be a plurality of different safety zone configurations selectable for a switch from the safety zone configuration of fig. 2, where one of the selectable safety zone configurations is the safety zone configuration 400 of fig. 4. Another possible alternative safety zone configuration 500 is exemplified in fig. 5, where each of the tunnels 110, 120, 130, 140 each form separate safety zones S1", S2", S3", S4".

In step 303 it is determined whether a new safety zone configuration has been selected, and when it is established that this is the case, actions to be taken by the operator is prompted through the interface, step 304. There may be a number of actions that need to be taken, and acknowledged to the main control unit 160 before the system is armed and activated for control according to the newly selected safety zone configuration 400.

For example, there are barriers that are to be inactivated and no longer form part in the control of the safety system following the change of configuration, while there are other barriers that, instead, are to be armed and form part of the control. In particular, barrier 112 is to be deactivated, and physical obstructions/blockings, in case such are present, be removed since tunnel 110 will be integrated with other parts of the work area.

Furthermore, barriers 151, 152 are to be activated, since tunnel 150 will form part of the safety zone S1'. Similarly, barriers 132, 141 will be activated, while barrier 121 will be deactivated and barrier 122 possibly be reconfigured, since the new safety zone will be on the other side of the barrier 122.

According to the present example there are hence various actions that need to be taken, where one action at a time may be prompted by the interface, and where an operator may need to acknowledge each action as being carried out in case physical actions need to be performed, e.g. in terms of adding and/or removing physical barrier items. There may also be a requirement that it is checked e.g. that the parts of the work area that are to be taken into use as safety zones are cleared from personnel and vehicles. The operator may also be asked e.g. whether an unmanned vehicle is already present in a location that is to form part of a safety zone in the new configuration, so that it may be ensured that this vehicle is properly checked-in to the safety zone, so that the safety system is aware of all vehicles being present in a safety area when the system is going active.

In step 305 it is determined whether all required actions has been carried out and acknowledged, and in step 306 a request for a confirmation that the system is to be activated applying the selected configuration is prompted, and when this is received, system control is commenced by the main control unit in step 307, whereby the main control unit commence control operation of the one or more safety zones according to the selected setting. The method is then ended in step 308 to be repeated once a switch of safety zone configuration is again to be performed.

The invention hence provides a safety system that is flexible and dynamic by allowing use of a plurality of different safety zone configurations that are designed for the particular work area for which the safety system is set up. Simultaneously, since the safety zone configurations are predetermined, prior to the safety system is taken into use, it can be ensured that the various safety system configurations have been properly checked for possible vulnerabilities, which may not be the case if an operator freely may alter e.g. barriers and add or remove safety zones at will.

## Claims

1. A safety system for restricting operation of at least one automated mining vehicle (113, 123) to a safety zone forming part of a work area (100) comprising a plurality of safety zones (S1, S2; S1';S1",S2",S3",S4") defined by barrier sensors at respective entrances and/or exits of the plurality of safety zones (S1, S2; S1';S1",S2",S3",S4"), sensor signals of the barrier sensors being communicated by sensor communication circuitry, and the safety system comprising a main control unit (160) configured to control operation of the plurality of safety zones (S1, S2; S1';S1",S2",S3",S4"), based on barrier sensor signals received from the sensor communication circuitry,
**characterized in:**
**that** the main control unit (160) is configured to store a plurality of predetermined safety zone configurations (200, 400, 500) that are designed for the work area for which the safety system is set up and that are predetermined prior to taking the safety system into use, and
**that** the main control unit (160) comprises an interface configured to enable a switch from one safety zone configuration to another, such that a predetermined safety zone configuration to be used for automated operation of mining vehicles (113, 123) within the work area is selectable via the interface, wherein a plurality of different predetermined safety zone configurations (200, 400, 500) are selectable,
wherein only a predetermined plurality of predefined settings are selectable through the interface when switching from a first safety zone configuration to a second safety zone configuration, and
wherein a switch from a first safety zone configuration to a second, safety zone configuration, causes the main control unit (160) of the safety system to control operation of the plurality of safety zones (S1, S2; S1';S1",S2",S3",S4") according to the selected setting.

2. Safety system according to claim 1, wherein different safety zone configurations (200, 400, 500) utilise at least partly different sets of a predefined plurality of barrier sensors of the work area as entrances and/or exits of the one or more safety zones (S1, S2; S1';S1",S2",S3",S4").

3. Safety system according to claim 1 or 2, wherein the predefined plurality of safety zone configurations (200, 400, 500) utilise all, or a selection of, a predefined set of barrier sensors, located at defined locations of the work area, each safety zone configuration utilising barrier sensors of the predefined set of barrier sensors in a manner such that the safety zone configurations (200, 400, 500) represent a different number of, and/or different geographical extension of, safety zones (S1, S2; S1';S1",S2",S3",S4").

4. Safety system according to any one of the claims 1-3, wherein an influence of a particular barrier sensor of the work area when the main control unit (160) control operation of the safety zones (S1, S2; S1'; S1",S2",S3",S4") depend on whether or not the particular barrier sensor is located at a position used as an entrance and/or exit of a safety zone according to the selected safety zone configuration.

5. Safety system according to any one of the claims 1-4, wherein the barrier sensors are configured to detect presence of an object such as a vehicle (113, 123) at a particular barrier sensor, the signals representing a state of a barrier sensor indicate whether or not a presence is detected by the barrier sensor.

6. Safety system according to any one of the claims 1-5 , wherein a vehicle (113, 123), when being taken into, or out from, use in a particular safety zone, is checked-in to, or checked-out from, the safety system such that the main control unit (160) is aware of the current presence of the vehicle (113, 123) in the safety zones (S1, S2; S1';S1",S2",S3",S4").

7. Safety system according to claim 6 , further comprising receiving means for receiving an identity, e.g. through RFID or other wireless communication, of a vehicle (113, 123) being checked-in to, or checked-out from, a safety zone.

8. Safety system according to any one of the claims 1-7, wherein each entrance and/or exit is provided with at least a first and a second barrier sensor for detecting presence of an object, the first and second barrier sensors being located at a distance from each other, so as to, by successively detecting an object by one of the first and second barrier sensors followed by detecting an object by the other of the first and second barrier sensors, determine a direction of motion of the object.

9. Safety system according to claim 8 , wherein a vehicle (113, 123) is automatically checked-in to, or checked-out from, a safety zone by detection of an identity of thevehicle, and by successive detection of presence by one of the at least a first and second barrier sensors followed by detection of presence by the other of the at least a first and second barrier sensor.

10. Safety system according to any one of the claims 1-9 , wherein the system is configured to, when detecting unauthorised presence of an object at an entrance and/or exit of a safety zone comprising at least one vehicle (113, 123):
transmit a stop command to the at least one vehicle (113, 123) being present in the safety zone, so as to stop operation of the at least one vehicle (113, 123) being present in the safety zone.

11. Safety system according to claim 10 , further comprising a vehicle module, the vehicle module, when installed in a vehicle (113, 123), is configured to stop operation of the vehicle (113, 123) upon request from the main control unit (160).

12. A safety system according to any one of the claims 1-13, wherein, in at least one of the predetermined safety zone configurations (200, 400, 500), at least one barrier sensor is shared by two safety zones, thereby being used as entry/exit between the two safety zones.

13. A method for restricting operation of at least one automated mining vehicle (113, 123) to a safety zone forming part of a work area comprising a plurality of safety zones (S1, S2; S1';S1",S2",S3",S4") defined by barrier sensors at respective entrances and/or exits of the plurality of safety zones (S1, S2; S1';S1",S2",S3",S4"), wherein sensor signals of the barrier sensors being communicated by sensor communication circuitry and the safety system comprising a main control unit (160) controlling operation of the plurality of safety zones (S1, S2; S1';S1",S2",S3",S4") based on the barrier sensor signals received from the sensor communication circuitry, **characterized in** the method comprising:
by means of an interface of the safety system, receiving a request for a switch of a predetermined safety zone configuration to be used for automated operation of mining vehicles (113, 123) within the work area, the main control unit (160) is configured to store a plurality of predetermined safety zone configurations (200, 400, 500) that are designed for the work area for which the safety system is set up and that are predetermined prior to taking the safety system into use, wherein a plurality of different predetermined safety zone configurations (200, 400, 500) are selectable, and wherein only a predetermined plurality of predefined settings are selectable through the interface when requesting the switch from a first safety zone configuration to a second safety zone configuration,
switching from the first safety zone configuration to the second safety zone configuration, and
when switching from the first safety zone configuration to the second safety zone configuration, setting the main control unit (160) to control the safety system to control operation of the plurality of safety zones (S1, S2; S1';S1",S2",S3",S4") according to the selected setting.

14. Computer program comprising instructions which, when the program is executed by a computer, cause the computer to carry out the method according to claim 13.

15. Computer-readable medium comprising instructions which, when executed by a computer, cause the computer to carry out the method according to claim 13.

## Patentansprüche

1. Sicherheitssystem zur Beschränkung des Betriebs mindestens eines automatisierten Bergbaufahrzeugs (113, 123) auf einen Sicherheitszonen-bildenden Teil eines Arbeitsbereichs (100), der eine Vielzahl von Sicherheitszonen (S1, S2; S1';S1",S2",S3",S4") umfasst, die durch Barrieresensoren an jeweiligen Ein- und/oder Ausgängen der Vielzahl von Sicherheitszonen (S1, S2; S1';S1",S2",S3",S4") definiert sind, wobei Sensorsignale der Barrieresensoren durch eine Sensorkommunikationsschaltung übermittelt werden und das Sicherheitssystem eine Hauptsteuereinheit (160) umfasst, die konfiguriert ist, um den Betrieb der mehreren Sicherheitszonen (S1, S2; S1';S1",S2",S3",S4") auf der Grundlage von Barrieresensorsignalen zu steuern, die von der Sensorkommunikationsschaltung empfangen werden,
**gekennzeichnet dadurch:**
**dass** die Hauptsteuereinheit (160) konfiguriert ist, um eine Vielzahl von vorbestimmten Sicherheitszonenkonfigurationen (200, 400, 500) zu speichern, die für den Arbeitsbereich ausgelegt sind, für den das Sicherheitssystem eingerichtet ist, und die vor der Inbetriebnahme des Sicherheitssystems vorbestimmt werden, und
**dass** die Hauptsteuereinheit (160) eine Schnittstelle umfasst, die konfiguriert ist, um einen Wechsel von einer Sicherheitszonenkonfiguration zu einer anderen zu ermöglichen, so dass über die Schnittstelle eine vorbestimmte Sicherheitszonenkonfiguration für den automatischen Betrieb von Bergbaufahrzeugen (113, 123) innerhalb des Arbeitsbereichs ausgewählt werden kann, wobei eine Vielzahl verschiedener vorbestimmter Sicherheitszonenkonfigurationen (200, 400, 500) wählbar ist,
wobei beim Umschalten von einer ersten Sicherheitszonenkonfiguration zu einer zweiten Sicherheitszonenkonfiguration nur eine vorbestimmte Vielzahl von vordefinierten Einstellungen über die Schnittstelle auswählbar ist, und
wobei ein Wechsel von einer ersten Sicherheitszonenkonfiguration zu einer zweiten Sicherheitszonenkonfiguration die Hauptsteuereinheit (160) des Sicherheitssystems veranlasst, den Betrieb der mehreren Sicherheitszonen (S1, S2; S1';S1",S2",S3",S4") entsprechend der gewählten Einstellung zu steuern.

2. Sicherheitssystem nach Anspruch 1, wobei unterschiedliche Sicherheitszonenkonfigurationen (200, 400, 500) zumindest teilweise unterschiedliche Sätze einer vordefinierten Vielzahl von Barrieresensoren des Arbeitsbereichs als Eingänge und/oder Ausgänge der einen oder mehreren Sicherheitszonen (S1, S2; S1';S1",S2",S3",S4") verwenden.

3. Sicherheitssystem nach Anspruch 1 oder 2, wobei die vordefinierte Vielzahl von Sicherheitszonenkonfigurationen (200, 400, 500) alle oder eine Auswahl eines vordefinierten Satzes von Barrieresensoren verwendet, die sich an definierten Stellen des Arbeitsbereichs befinden, wobei jede Sicherheitszonenkonfiguration Barrieresensoren des vordefinierten Satzes von Barrieresensoren in einer Weise verwendet, so dass die Sicherheitszonenkonfigurationen (200, 400, 500) eine unterschiedliche Anzahl von Sicherheitszonen und/oder eine unterschiedliche geografische Ausdehnung von Sicherheitszonen (S1, S2; S1';S1",S2",S3",S4") darstellen.

4. Sicherheitssystem nach einem der Ansprüche 1-3, wobei ein Einfluss eines bestimmten Barrieresensors des Arbeitsbereichs, wenn die Hauptsteuereinheit (160) den Betrieb der Sicherheitszonen (S1, S2; S1';S1",S2",S3",S4") steuert, davon abhängt, ob sich der bestimmte Barrieresensor an einer Position befindet, die als Eingang und/oder Ausgang einer Sicherheitszone entsprechend der ausgewählten Sicherheitszonenkonfiguration verwendet wird oder nicht.

5. Sicherheitssystem nach einem der Ansprüche 1-4, wobei die Barrieresensoren konfiguriert sind, um die Anwesenheit eines Objekts, wie eines Fahrzeugs (113, 123), an einem bestimmten Barrieresensor zu erfassen, wobei die Signale, die einen Zustand eines Barrieresensors darstellen, angeben, ob eine Anwesenheit durch den Barrieresensor erfasst wird oder nicht.

6. Sicherheitssystem nach einem der Ansprüche 1-5, wobei ein Fahrzeug (113, 123), wenn es in einer bestimmten Sicherheitszone in Betrieb genommen oder aus dem Betrieb genommen wird, in das Sicherheitssystem eingecheckt oder aus diesem ausgecheckt wird, so dass die Hauptsteuereinheit (160) über die aktuelle Anwesenheit des Fahrzeugs (113, 123) in den Sicherheitszonen (S1, S2; S1';S1",S2",S3",S4") informiert ist.

7. Sicherheitssystem nach Anspruch 6, weiter umfassend Empfangsmittel zum Empfangen einer Identität, z. B. durch RFID oder andere drahtlose Kommunikation, eines Fahrzeugs (113, 123), das in eine Sicherheitszone eingecheckt oder aus ihr ausgecheckt wird.

8. Sicherheitssystem nach einem der Ansprüche 1-7, wobei jeder Eingang und/oder Ausgang mit mindestens einem ersten und einem zweiten Barrieresensor zum Erfassen der Anwesenheit eines Objekts bereitgestellt ist, wobei der erste und der zweite Barrieresensor in einem Abstand voneinander angeordnet sind, um durch sukzessive Erfassung eines Objekts durch einen der ersten und zweiten Barrieresensoren, gefolgt von der Erfassung eines Objekts durch den anderen der ersten und zweiten Barrieresensoren, eine Bewegungsrichtung des Objekts zu bestimmen.

9. Sicherheitssystem nach Anspruch 8, wobei ein Fahrzeug (113, 123) automatisch in eine Sicherheitszone eingecheckt oder aus ihr ausgecheckt wird, indem die Identität des Fahrzeugs erfasst wird und indem nacheinander die Anwesenheit von einem der mindestens einen ersten und zweiten Barrieresensoren erfasst wird, gefolgt von der Erfassung der Anwesenheit durch den anderen der mindestens einen ersten und zweiten Barrieresensoren.

10. Sicherheitssystem nach einem der Ansprüche 1-9, wobei das System konfiguriert ist, um, wenn es die unbefugte Anwesenheit eines Objekts an einer Einfahrt und/oder Ausfahrt einer Sicherheitszone erfasst umfassend mindestens ein Fahrzeug (113, 123):
einen Stoppbefehl an das mindestens eine Fahrzeug (113, 123) zu senden, das sich in der Sicherheitszone befindet, so dass der Betrieb des mindestens einen Fahrzeugs (113, 123), das sich in der Sicherheitszone befindet, gestoppt wird.

11. Sicherheitssystem nach Anspruch 10, weiter umfassend ein Fahrzeugmodul, wobei das Fahrzeugmodul, wenn es in einem Fahrzeug (113, 123) installiert ist, konfiguriert ist, um den Betrieb des Fahrzeugs (113, 123) auf Anforderung der Hauptsteuereinheit (160) zu stoppen.

12. Sicherheitssystem nach einem der Ansprüche 1-13, wobei in mindestens einer der vorbestimmten Sicherheitszonenkonfigurationen (200, 400, 500) mindestens ein Barrieresensor von zwei Sicherheitszonen gemeinsam genutzt wird, und dadurch als Ein- und Ausfahrt zwischen den beiden Sicherheitszonen verwendet wird.

13. Verfahren zur Beschränkung des Betriebs mindestens eines automatisierten Bergbaufahrzeugs (113, 123) auf einen Sicherheitszonen-bildenden Teil eines Arbeitsbereichs, der eine Vielzahl von Sicherheitszonen ((S1, S2; S1';S1",S2",S3",S4") umfasst, die durch Barrieresensoren an jeweiligen Eingängen und/oder Ausgängen der Vielzahl von Sicherheitszonen (S1, S2; S1';S1",S2",S3",S4") definiert sind, wobei Sensorsignale der Barrieresensoren durch eine Sensorkommunikationsschaltung übermittelt werden und das Sicherheitssystem eine Hauptsteuereinheit (160) umfasst, die den Betrieb der Vielzahl von Sicherheitszonen (S1, S2; S1';S1",S2",S3",S4") auf der Grundlage der von der Sensorkommunikationsschaltung empfangenen Barrieresensorsignale steuert, **dadurch gekennzeichnet, dass** das Verfahren Folgendes umfasst:
mittels einer Schnittstelle des Sicherheitssystems eine Anforderung für einen Wechsel einer vorbestimmten Sicherheitszonenkonfiguration, die für einen automatisierten Betrieb von Bergbaufahrzeugen (113, 123) innerhalb des Arbeitsbereichs zu verwenden ist, zu empfangen, wobei die Hauptsteuereinheit (160) konfiguriert ist, um eine Vielzahl von vorbestimmten Sicherheitszonenkonfigurationen (200, 400, 500) zu speichern, die für den Arbeitsbereich, für den das Sicherheitssystem eingerichtet ist, ausgelegt sind und die vor der Inbetriebnahme des Sicherheitssystems vorbestimmt sind, wobei eine Vielzahl verschiedener vorbestimmter Sicherheitszonenkonfigurationen (200, 400, 500) wählbar ist, und wobei nur eine vorbestimmte Vielzahl von vordefinierten Einstellungen über die Schnittstelle auswählbar ist, wenn der Wechsel von einer ersten Sicherheitszonenkonfiguration zu einer zweiten Sicherheitszonenkonfiguration angefordert wird,
Umschalten von der ersten Sicherheitszonenkonfiguration auf die zweite Sicherheitszonenkonfiguration, und
beim Umschalten von der ersten Sicherheitszonenkonfiguration auf die zweite Sicherheitszonenkonfiguration, Einstellen der Hauptsteuereinheit (160) zur Steuerung des Sicherheitssystems, um den Betrieb der mehreren Sicherheitszonen (S1, S2; S1';S1",S2",S3",S4") entsprechend der gewählten Einstellung zu steuern.

14. Computerprogramm, das Befehle umfasst, die, wenn das Programm von einem Computer ausgeführt wird, den Computer veranlassen, das Verfahren nach Anspruch 13 auszuführen.

15. Computerlesbares Medium, das Befehle umfasst, die, wenn sie von einem Computer ausgeführt werden, den Computer veranlassen, das Verfahren nach Anspruch 13 auszuführen.

## Revendications

1. Système de sécurité pour restreindre le fonctionnement d'au moins un véhicule minier automatisé (113, 123) à une zone de sécurité faisant partie d'une zone de travail (100) comprenant une pluralité de zones de sécurité (S1, S2 ; S1' ; S1", S2", S3", S4") définies par des capteurs de type barrière à des entrées et/ou sorties respectives de la pluralité de zones de sécurité (S1, S2 ; S1' ; S1", S2", S3", S4"), des signaux de capteur des capteurs de type barrière étant communiqués par des circuits de communication de capteur, et le système de sécurité comprenant une unité de commande principale (160) configurée pour commander le fonctionnement de la pluralité de zones de sécurité (S1, S2 ; S1' ; S1", S2", S3", S4"), sur la base de signaux de capteur de type barrière reçus en provenance des circuits de communication de capteur,
**caractérisé en ce que :**
l'unité de commande principale (160) est configurée pour stocker une pluralité de configurations (200, 400, 500) de zone de sécurité prédéterminées qui sont conçues pour la zone de travail pour laquelle le système de sécurité est paramétré et qui sont prédéterminées avant la mise en service du système de sécurité, et
l'unité de commande principale (160) comprend une interface configurée pour permettre une commutation d'une configuration de zone de sécurité vers une autre, de sorte qu'une configuration de zone de sécurité prédéterminée à utiliser pour le fonctionnement automatisé de véhicules miniers (113, 123) à l'intérieur de la zone de travail puisse être sélectionnée par l'intermédiaire de l'interface, dans lequel une pluralité de configurations (200, 400, 500) de zone de sécurité prédéterminées différentes peuvent être sélectionnées,
dans lequel seule une pluralité prédéterminée de réglages prédéfinis peuvent être sélectionnés par l'intermédiaire de l'interface lors de la commutation d'une première configuration de zone de sécurité vers une deuxième configuration de zone de sécurité, et
dans lequel une commutation d'une première configuration de zone de sécurité vers une deuxième configuration de zone de sécurité amène l'unité de commande principale (160) du système de sécurité à commander le fonctionnement de la pluralité de zones de sécurité (S1, S2 ; S1' ; S1", S2", S3", S4") selon le réglage sélectionné.

2. Système de sécurité selon la revendication 1, dans lequel différentes configurations (200, 400, 500) de zone de sécurité utilisent au moins en partie différents ensembles d'une pluralité prédéfinie de capteurs de type barrière de la zone de travail comme entrées et/ou sorties des une ou plusieurs zones de sécurité (S1, S2 ; S1' ; S1", S2", S3", S4").

3. Système de sécurité selon la revendication 1 ou la revendication 2, dans lequel la pluralité prédéfinie de configurations (200, 400, 500) de zone de sécurité utilisent la totalité, ou une sélection, d'un ensemble prédéfini de capteurs de type barrière, situés à des emplacements définis de la zone de travail, chaque configuration de zone de sécurité utilisant des capteurs de type barrière de l'ensemble prédéfini de capteurs de type barrière d'une manière telle que les configurations (200, 400, 500) de zone de sécurité représentent un nombre différent, et/ou une extension géographique différente, de zones de sécurité (S1, S2 ; S1' ; S1",S2", S3", S4").

4. Système de sécurité selon l'une quelconque des revendications 1 à 3, dans lequel une influence d'un capteur de type barrière particulier de la zone de travail, lorsque l'unité de commande principale (160) commande le fonctionnement des zones de sécurité (S1, S2 ; S1' ; S1",S2", S3", S4"), dépend du fait que le capteur de type barrière particulier est situé ou non à une position utilisée comme entrée et/ou sortie d'une zone de sécurité selon la configuration de zone de sécurité sélectionnée.

5. Système de sécurité selon l'une quelconque des revendications 1 à 4, dans lequel les capteurs de type barrière sont configurés pour détecter la présence d'un objet tel qu'un véhicule (113, 123) au niveau d'un capteur de type barrière particulier, les signaux représentant un état d'un capteur de type barrière indiquant si une présence est détectée ou non par le capteur de type barrière.

6. Système de sécurité selon l'une quelconque des revendications 1 à 5, dans lequel un véhicule (113, 123), lorsqu'il est mis en service dans une zone de sécurité particulière ou mis hors service de celle-ci, est enregistré dans le système de sécurité ou désenregistré de celui-ci de sorte que l'unité de commande principale (160) soit informée de la présence actuelle du véhicule (113, 123) dans les zones de sécurité (S1, S2 ; S1' ; S1",S2", S3", S4").

7. Système de sécurité selon la revendication 6, comprenant en outre des moyens de réception pour recevoir une identité, par exemple par RFID ou une autre communication sans fil, d'un véhicule (113, 123) en cours d'enregistrement dans une zone de sécurité ou de désenregistrement de celle-ci.

8. Système de sécurité selon l'une quelconque des revendications 1 à 7, dans lequel chaque entrée et/ou sortie est dotée d'au moins un premier et un deuxième capteur de type barrière pour détecter la présence d'un objet, les premier et deuxième capteurs de type barrière étant situés à une distance l'un de l'autre, de façon à déterminer, en détectant successivement un objet au moyen de l'un des premier et deuxième capteurs de type barrière, puis en détectant un objet au moyen de l'autre des premier et deuxième capteurs de type barrière, une direction de déplacement de l'objet.

9. Système de sécurité selon la revendication 8, dans lequel un véhicule (113, 123) est automatiquement enregistré dans une zone de sécurité ou désenregistré de celle-ci par détection d'une identité du véhicule, et par détection successive d'une présence au moyen d'un capteur parmi l'au moins un premier et un deuxième capteur de type barrière, puis par détection d'une présence au moyen de l'autre capteur parmi l'au moins un premier et un deuxième capteur de type barrière.

10. Système de sécurité selon l'une quelconque des revendications 1 à 9, dans lequel le système est configuré pour, lors de la détection de la présence non autorisée d'un objet à une entrée et/ou une sortie d'une zone de sécurité comprenant au moins un véhicule (113, 123) :
transmettre une instruction d'arrêt à l'au moins un véhicule (113, 123) présent dans la zone de sécurité, de façon à interrompre le fonctionnement de l'au moins un véhicule (113, 123) présent dans la zone de sécurité.

11. Système de sécurité selon la revendication 10, comprenant en outre un module de véhicule, le module de véhicule, lorsqu'il est installé dans un véhicule (113, 123), étant configuré pour interrompre le fonctionnement du véhicule (113, 123) à la demande de l'unité de commande principale (160).

12. Système de sécurité selon l'une quelconque des revendications 1 à 13, dans lequel, dans au moins l'une des configurations (200, 400, 500) de zone de sécurité prédéterminées, au moins un capteur de type barrière est partagé par deux zones de sécurité, étant ainsi utilisé comme entrée/sortie entre les deux zones de sécurité.

13. Procédé de restriction du fonctionnement d'au moins un véhicule minier automatisé (113, 123) à une zone de sécurité faisant partie d'une zone de travail comprenant une pluralité de zones de sécurité (S1, S2 ; S1' ; S1",S2", S3", S4") définies par des capteurs de type barrière à des entrées et/ou sorties respectives de la pluralité de zones de sécurité (S1, S2 ; S1' ; S1",S2", S3", S4"), dans lequel des signaux de capteur des capteurs de type barrière sont communiqués par des circuits de communication de capteur et le système de sécurité comprenant une unité de commande principale (160) commandant le fonctionnement de la pluralité de zones de sécurité (S1, S2 ; S1' ; S1",S2", S3", S4") sur la base des signaux de capteur de type barrière reçus en provenance des circuits de communication de capteur, **caractérisé en ce que** le procédé comprend :
au moyen d'une interface du système de sécurité, une réception d'une demande de commutation d'une configuration de zone de sécurité prédéterminée à utiliser pour le fonctionnement automatisé de véhicules miniers (113, 123) à l'intérieur de la zone de travail, l'unité de commande principale (160) étant configurée pour stocker une pluralité de configurations (200, 400, 500) de zone de sécurité prédéterminées qui sont conçues pour la zone de travail pour laquelle le système de sécurité est paramétré et qui sont prédéterminées avant la mise en service du système de sécurité, dans lequel une pluralité de configurations (200, 400, 500) de zone de sécurité prédéterminées différentes peuvent être sélectionnées, et dans lequel seule une pluralité prédéterminée de réglages prédéfinis peuvent être sélectionnés par l'intermédiaire de l'interface lors de la demande de commutation d'une première configuration de zone de sécurité vers une deuxième configuration de zone de sécurité,
une commutation de la première configuration de zone de sécurité vers la deuxième configuration de zone de sécurité, et
lors de la commutation de la première configuration de zone de sécurité vers la deuxième configuration de zone de sécurité, un réglage de l'unité de commande principale (160) pour qu'elle commande le système de sécurité de façon à commander le fonctionnement de la pluralité de zones de sécurité (S1, S2 ; S1' ; S1", S2", S3", S4") selon le réglage sélectionné.

14. Programme informatique comprenant des instructions qui, lorsque le programme est exécuté par un ordinateur, amènent l'ordinateur à mettre en œuvre le procédé selon la revendication 13.

15. Support lisible par ordinateur comprenant des instructions qui, lorsqu'elles sont exécutées par un ordinateur, amènent l'ordinateur à mettre en œuvre le procédé selon la revendication 13.
